# DEMANDE DE BREVET EUROPEEN

(11) **EP 2 104 035 A1**
(43) Date de publication de la demande: **23.09.2009**
(21) Numéro de dépôt: 09154733.1
(22) Date de dépôt: 10.03.2009
(51) Int. Cl.: G06F 9/44, G06F 9/50, H04L 29/06, H04L 29/08

(54) **Interface Homme Machine basée sur le langage XAML**

(30) Priorité: 17.03.2008 FR 0851717
(71) Demandeur: Schneider Electric Industries SAS, 92500 Rueil-Malmaison (FR)
(72) Inventeur: Stawikowski, Jean-Marie, 06600, ANTIBES (FR)
(74) Mandataire: Dufresne, Thierry

(57) **Abrégé**

L'invention concerne une méthode de mise en oeuvre d'un programme application HMI (20) dans un équipement HMI (30) pour surveiller, visualiser, commander, configurer ou programmer un ou plusieurs équipements d'automatisme (10) connectés à l'équipement HMI (30) via un réseau IP (50), le programme application HMI (20) comprenant plusieurs contrôles d'interface utilisateur (22) dotés d'une description en langage XAML et associés à des objets de l'équipement d'automatisme (10). La méthode comporte une étape de création d'un singleton de communication (24) destiné à établir une communication entre le programme application HMI (20) et l'équipement d'automatisme (10), une étape d'abonnement des contrôles (22) au singleton (24) de sorte que les contrôles (22) utilisent le même singleton (24), une étape d'exécution du singleton (24) permettant aux contrôles (22) de communiquer avec lesdits objets associés de l'équipement d'automatisme (10).

## Description

La présente invention se rapporte à une méthode de mise en oeuvre d'un programme application d'interface Homme-Machine, lequel est destiné à être exécuté dans un équipement d'interface Homme-Machine pour fournir des fonctions de surveillance, de visualisation, de contrôle, de configuration ou de programmation d'un ou plusieurs équipements d'automatisme connectés à l'équipement d'interface Homme-Machine via un réseau IP.

Sous le terme équipement d'interface Homme-Machine, on désignera ci-après indifféremment un appareil de type ordinateur individuel, un téléphone portable, un appareil de type PDA (Personal Digital Assistant), un terminal de dialogue, une station de programmation d'un équipement d'automatisme ou tout autre équipement informatique équipé de moyens de visualisation et de saisie (par exemple écran-clavier). Un tel équipement d'interface Homme-Machine comporte des moyens de connexion à au moins un équipement d'automatisme via un réseau IP et une unité de traitement capable d'exécuter au moins un programme application d'Interface Homme-Machine.

Sous le terme équipement d'automatisme, on désignera ci-après un automate programmable, une commande numérique, une station de contrôle/commande mais aussi tout équipement ou module d'automatisme possédant au moins une unité de traitement, capable de se connecter sur un réseau IP, et capable d'exécuter un programme pour piloter, commander et/ou surveiller une application ou process d'automatisme. On inclura ainsi dans cette définition un module métier ou un module d'entrées/sorties d'un automate programmable, un variateur de vitesse, etc.... Un tel équipement d'automatisme peut s'utiliser dans toute application d'automatisme appartenant notamment au domaine des automatismes industriels, des automatismes du bâtiment et des infrastructures, du contrôle/commande des réseaux électriques de distribution.

Sous le terme programme application d'Interface Homme-Machine (IHM ou HMI - Human-Machine Interface), on désignera ci-après un programme informatique capable de s'exécuter dans un équipement d'interface Homme-Machine, pour offrir une ou plusieurs fonctions de surveillance, de visualisation, de commande, de configuration ou de programmation pour au moins un équipement d'automatisme. Un tel programme application peut par exemple être du type RIA (Rich Internet Applications) exécutable sur un navigateur WEB, ou du type RDA (Rich Desktop Application) qui ne nécessite pas un navigateur WEB.

Sous le terme réseau IP (Internet Protocol), on désignera ci-après un réseau global de type Internet, Intranet ou Extranet conforme notamment à la norme TCP/IP ou à la norme UDP/IP.

Il est connu qu'un équipement d'automatisme puisse intégrer un serveur WEB de façon à pouvoir échanger des données via un réseau de communication IP avec un client WEB, tel qu'un navigateur, intégré dans un équipement d'interface Homme-Machine distant. Ces fonctionnalités sont décrites notamment dans les documents WO9913418, US6061603 et US5805442. Les données relatives à l'équipement d'automatisme sont alors mises en forme et expédiées par le serveur WEB, par exemple sous forme de pages HTML ou XML (eXtended Markup Language). Il est également possible qu'un serveur WEB d'un équipement d'automatisme puisse charger des composants logiciels, comme par exemple un "applet", un "plug-in", un contrôle "ActiveX", etc..., dans le client WEB, lequel exécute ensuite ces composants de façon à échanger avec le serveur WEB de l'équipement d'automatisme des requêtes transportées par le protocole IP.

Par ailleurs, le document EP1710639A2 décrit qu'un tel composant logiciel peut inclure des applications XAML (extensible Application Markup Language), c'est-à-dire des applications qui comportent une description conforme au langage XAML et du code associé.

Le langage XAML est un langage qui permet de décrire des interfaces utilisateur et qui est basé sur le langage XML (eXtended Markup Language). XAML permet de séparer la construction de l'interface utilisateur du code sous-jacent et inclut également des fonctionnalités pour manipuler des objets ou des animations en trois dimensions (3D). En particulier, les possibilités de mise à l'échelle automatique des images vectorielles offertes par le langage XAML permettent à un utilisateur d'un équipement d'interface Homme-Machine de pouvoir redimensionner des graphismes du programme application informatique à volonté sans aucun effet d'escalier. Cette faculté est intéressante pour adapter les graphismes à la taille des écrans des équipements d'interface Homme-Machine, par exemple.

Il serait intéressant pour un concepteur d'utiliser des outils de création d'interface utilisateur de plus en plus répandus sur le marché comme par exemple l'outil Microsoft® Expression Blend™ pour la création d'un programme application informatique d'Interface Homme-Machine conforme au langage XAML. En effet, un équipement d'automatisme pourrait ainsi communiquer avec un équipement d'interface Homme-Machine, par l'intermédiaire de contrôles d'interfaces utilisateur conformes au langage XAML et développés séparément des outils de développement du monde de l'automatisme, ouvrant ainsi largement les domaines des automatismes au domaine de l'Internet.

Cependant, l'utilisation de tels outils risque de compliquer les échanges de données entre le programme application d'Interface Homme-Machine et le ou les équipements d'automatisme. En effet, le programme application d'Interface Homme-Machine comporte plusieurs contrôles d'interfaces utilisateur différents qui sont susceptibles de lire et/ou écrire des variables d'un ou plusieurs équipements d'automatisme, selon un ou plusieurs protocoles de communication. Il est donc important d'optimiser ces échanges de données.

C'est pourquoi l'invention décrit une méthode de mise en oeuvre d'un programme application d'interface Homme-Machine dans un équipement d'interface Homme-Machine pour fournir des fonctions de surveillance, de visualisation, de commande, de configuration ou de programmation d'un ou plusieurs équipements d'automatisme connectés à l'équipement d'interface Homme-Machine via un réseau IP, le programme application d'interface Homme-Machine comprenant plusieurs contrôles d'interface utilisateur qui sont dotés d'une description en langage XAML et qui sont associés à des objets du ou des équipements d'automatisme

La méthode comporte une étape de création d'un singleton de communication destiné à établir une communication entre le programme application d'interface Homme-Machine et le ou les équipements d'automatisme via le réseau IP, une étape d'abonnement des contrôles d'interface utilisateur au singleton de communication, de sorte que les contrôles d'interface utilisateur utilisent le même singleton de communication, une étape d'exécution du singleton de communication permettant aux contrôles d'interface utilisateur de communiquer avec lesdits objets associés du ou des équipements d'automatisme.

Selon une caractéristique, un objet d'un équipement d'automatisme est défini par une variable de l'équipement d'automatisme et par un protocole de communication permettant à un contrôle d'interface utilisateur d'accéder à ladite variable.

Selon une autre caractéristique, l'étape de création du singleton de communication est réalisée au moment de l'étape d'abonnement d'un premier contrôle d'interface utilisateur.

Selon une autre caractéristique, le programme application d'interface Homme-Machine est développé avec un outil de création d'interface utilisateur qui est conforme au langage XAML et qui instancie des contrôles d'interface utilisateur dans le programme application.

Selon une autre caractéristique, le singleton de communication explore les contrôles d'interface utilisateur abonnés, de façon à optimiser les requêtes de communication permettant d'accéder aux objets du ou des équipements d'automatisme.

Selon une autre caractéristique, le programme application d'interface Homme-Machine est mémorisé dans un serveur WEB intégré dans un équipement d'automatisme et est téléchargé dans l'équipement d'interface Homme-Machine par un navigateur Web lequel contient un environnement Microsoft® Silverligh™ pour exécuter le programme application.

L'invention concerne également un équipement d'interface Homme-Machine apte à mettre en oeuvre un programme application d'interface Homme-Machine selon une telle méthode.

D'autres caractéristiques et avantages vont apparaître dans la description détaillée qui suit en se référant à un mode de réalisation donné à titre d'exemple et représenté par les dessins annexés sur lesquels :

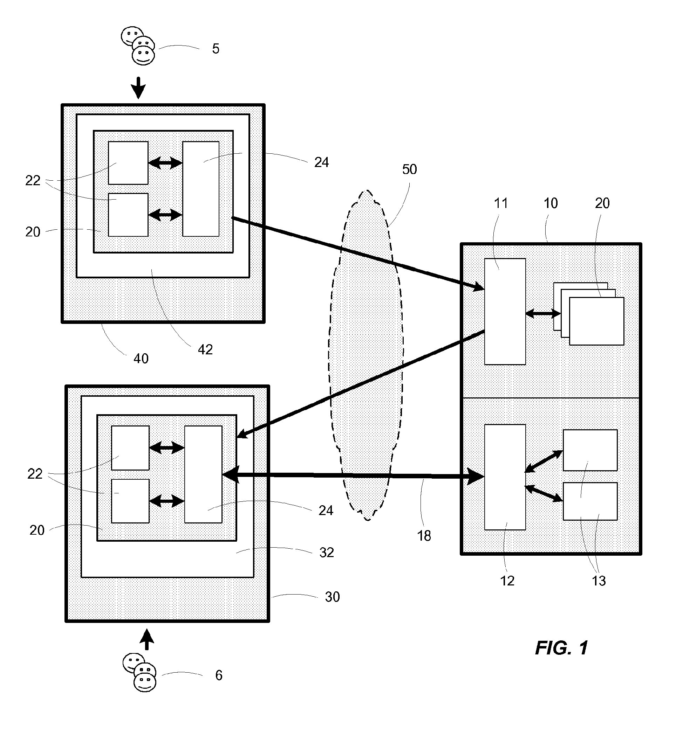

- la figure 1 représente un exemple d'une architecture simplifiée montrant l'environnement d'un équipement d'interface Homme-Machine conforme à l'invention.

En référence à la figure 1, un équipement d'automatisme 10 est destiné à exécuter un programme, appelé programme application d'automatisme, qui permet de piloter, commander et/ou surveiller une application d'automatisme, tel qu'un process à automatiser (non représenté sur les figures) au moyen notamment d'entrées/sorties. L'équipement d'automatisme 10 est connecté à un réseau IP 50 de façon à communiquer avec un équipement d'interface Homme-Machine 30. L'équipement d'interface Homme-Machine 30 est capable d'exécuter un programme informatique, appelé programme application d'Interface Homme-Machine 20. Ce programme application 20 fournit à un utilisateur 6 une ou plusieurs fonctions de surveillance, de visualisation, de commande, de configuration ou de programmation de l'équipement d'automatisme 10 ou de plusieurs équipements d'automatisme connectés sur le réseau IP 50.

L'équipement d'automatisme 10 comporte un serveur WEB 11, tel qu'un serveur HTTP (HyperText Transfer Protocol) et/ou un serveur FTP (File Transfer Protocol), ainsi qu'une interface de communication 12 permettant à l'équipement d'automatisme de communiquer sur le réseau IP 50 selon un protocole de communication 18.

La figure 1 présente également un équipement informatique 40, par exemple de type ordinateur PC, relié au réseau IP 50. Cet équipement informatique 40 est utilisé par un concepteur 5 pour créer un programme application d'Interface Homme-Machine 20 (build-time). Plusieurs programmes application 20 générés par le concepteur 5 peuvent ainsi être envoyés via le réseau IP 50 et mémorisés dans le serveur WEB 11 de l'équipement d'automatisme 10.

Un programme application d'interface Homme-Machine 20 mémorisé dans le serveur WEB 11 peut ensuite être téléchargé via le réseau IP 50 dans l'équipement d'interface Homme-Machine 30, de façon à ce que ce programme application 20 s'exécute dans l'équipement d'interface Homme-Machine 30 (run-time). Durant son exécution, le programme application 20 communique en temps réel avec différentes variables 13 de l'équipement d'automatisme 10.

Alternativement, un programme application 20 pourrait être téléchargé dans l'équipement d'interface Homme-Machine 30 directement à partir de l'équipement informatique 40, sans passer par un tel serveur WEB 11.

L'équipement informatique 40 utilise un outil de création d'interface utilisateur 42 qui permet au concepteur 5 de créer programme application d'Interface Homme-Machine 20.

Le terme outil de création d'interface utilisateur 42 désigne un outil de design professionnel servant à créer des programmes application d'Interface Homme-Machine de nouvelle génération. Dans le cadre de la présente invention, l'outil de création d'interface utilisateur 42 est par exemple Microsoft® Expression Blend™ qui est un outil permettant de créer des applications informatiques ou des contrôles d'interfaces utilisateur qui tirent partie de la technologie Microsoft® Silverligh™ pour les applications de type RIA ou qui tirent partie de la technologie Microsoft® Windows Presentation Foundation (WPF) pour les applications de type RDA.

La technologie Microsoft® Silverlight™ est une nouvelle technologie de présentation WEB capable de s'exécuter sur diverses plates-formes. Elle permet aux utilisateurs d'accéder, sur Internet, à une nouvelle génération d'expériences multimédias et d'applications de type RIA. Elle active la création d'environnements riches, attractifs et interactifs exécutables dans divers navigateurs WEB. Elle améliore les présentations à base de contenus riches (2D, 3D, animation, dessin vectoriel, vidéo et audio) en complément du code HTML. La technologie Microsoft® Silverlight™ est en cohérence avec WPF (Windows Presentation Foundation) et XAML (extensible Application Markup Language). La technologie Microsoft® Silverligh™ intègre une version du Framework
- NET avec un CLR (Common Language Runtime) et un DLR (Dynamic Language Runtime) qui permet donc d'exécuter des applications informatiques développées avec des langages de programmation conforme au langage JavaScript ou aux langages portés sous .NET comme langages de programmation tel que : VB.NET, C#, Managed JScript, IronPython ou IronRuby tous conformes avec une machine virtuelle de type .NET.

La technologie Microsoft® Windows Presentation Foundation (WPF) est une nouvelle technologie permettant aux utilisateurs d'accéder, à une nouvelle génération d'applications de type RDA. Elle gère les interfaces graphiques de Microsoft® .NET 3.0 et prend en charge l'ensemble des interfaces utilisateur, ainsi que les interactions entre l'utilisateur et la machine. Cela comprend le graphisme 2D et 3D, les interfaces audio, la reconnaissance vocale, la vidéo, les animations, et les fonctionnalités multimédias. Son principal composant est XAML (extensible Application Markup Language).

Le programme application d'Interface Homme-Machine 20 comprend plusieurs contrôles d'interface utilisateur 22. Un contrôle d'interface utilisateur 22 désigne un composant de base d'une interface graphique avec lequel un utilisateur 6 de l'équipement d'interface Homme-Machine 30 peut interagir (par exemple : un objet animé tel qu'un bouton de commande ou un voyant lumineux, une liste ou une zone de texte, etc...). Un contrôle d'interface utilisateur 22 comporte une partie description du composant graphique qui est écrite en langage XAML, ainsi qu'une partie code programme qui est écrit par exemple dans un langage de programmation tel que : VB.NET, C#, Managed JScript, IronPython ou IronRuby et qui décrit les comportements du composant graphique (interactions avec l'utilisateur 6, communication avec des objets d'automatisme).

Les contrôles d'interface utilisateur 22 sont créés et instanciés à l'aide de l'outil de création d'interface utilisateur 42, soit directement par un concepteur 5, soit à partir de bibliothèques graphiques existantes. Une fois assemblés, ces contrôles d'interfaces utilisateur 22 forment l'interface graphique complète du programme application 20.

Un contrôle d'interface utilisateur 22 peut être associé à un ou plusieurs objets d'automatisme d'un ou plusieurs équipements d'automatisme 10. Un objet d'un équipement d'automatisme est défini par une variable 13 d'un équipement d'automatisme, comme par exemple des entrées (reliées à des capteurs, etc...), des sorties (reliées à des actionneurs, etc...), des données internes, des registres, etc..., et par un protocole de communication 18 permettant à un contrôle d'interface utilisateur 22 d'accéder à cette variable 13. En effet, les variables 13 des objets d'automatisme sont accessibles en lecture et/ou écriture depuis le réseau IP 50 selon un ou plusieurs protocoles de communication 18 grâce à l'interface de communication 12 du ou des équipements d'automatisme 10. De même, on pourrait envisager qu'un même équipement d'automatisme 10 possède plusieurs interfaces de communication 12 permettant d'accéder à des variables 13 de cet équipement d'automatisme 10 via plusieurs protocoles de communication 18 distincts.

L'association entre le contrôle d'interface utilisateur 22 et un ou plusieurs objets d'automatisme est réalisée par un concepteur 5 lors de l'instanciation de ce contrôle d'interface utilisateur 22 dans le programme application 20 à l'aide de l'outil 42. Cette association consiste donc à définir une ou plusieurs variables d'équipement d'automatisme associées et à définir le protocole de communication 18 pour accéder à ces variables. Ces informations sont intégrées dans la partie description en XAML du contrôle d'interface utilisateur 22, de façon à pouvoir, lors de l'exécution du programme application 20, faire des échanges avec ces variables.

Le protocole de communication 18 est choisi parmi des protocoles qui sont utilisés dans des équipements d'automatisme, tels que par exemple les protocoles PROFInet, EtherNet/IP et MODBUS/TCP etc..., ou parmi des protocoles qui sont utilisés dans l'informatique et le WEB, tels que par exemple les protocoles SOAP (Simple Object Access Protocol), AJAX (Asynchronous JavaScript and XML), RSS (Really Simple Syndication), REST (Representational State Transfer), WCF (Windows Communication Foundation), JSON (JavaScript Object Notation), les Services WEB, POX (Plain Old XML), XML (eXtended Markup Language), TCP (Transmission Control Protocol), UDP (User Datagram Protocol), HTTP (Hypertext Transfer Protocol) et HTTPS (Hypertext Transfer Protocol Secured), etc...

Le programme application d'interface Homme-Machine 20 s'exécute dans un équipement d'interface Homme-Machine 30 à partir d'un navigateur WEB dans un environnement Microsoft® Silverlight™ 32. Selon un autre mode de réalisation, le programme application 20 peut aussi s'exécuter dans un équipement d'interface Homme-Machine 30 à partir d'un environnement WPF 32, sans nécessiter ainsi l'utilisation d'un navigateur WEB.

Lors du lancement d'une page HTML par un utilisateur 6, le navigateur WEB charge le programme application d'Interface Homme-Machine 20 correspondant à cette page HTML dans l'équipement d'interface Homme-Machine 30, par exemple à partir du serveur WEB 11, puis exécute ce programme application 20.

Selon l'invention, l'exécution du programme application d'Interface Homme-Machine 20 dans l'équipement d'interface Homme-Machine 30 comporte une étape de création d'un singleton de communication 24 qui est destiné à établir une communication entre le programme application d'interface Homme-Machine 20 et le ou les équipements d'automatisme 10 via le réseau IP 50.

Le terme singleton de communication 24 désigne un modèle de conception (ou un patron de conception - design pattern en anglais) dont le but est de créer un unique objet de communication, qui sera utilisé par tous les contrôles d'interfaces utilisateur 22. Le singleton de communication 24 unique est avantageusement utilisé pour coordonner et optimiser toutes les communications du programme application 20 avec un ou plusieurs équipements d'automatisme 10, selon le ou les protocoles de communications 18 associés aux contrôles d'interfaces utilisateur 22.

Une fois que le singleton de communication 24 est créé, tous les contrôles d'interfaces utilisateur 22 du programme application 20 s'abonnent automatiquement à ce singleton de communication 24 durant une étape d'abonnement. Le singleton 24 comporte une liste d'abonnés, c'est-à-dire une liste de références des contrôles d'interfaces utilisateur 22. L'abonnement d'un contrôle d'interface utilisateur 22 consiste en particulier à ajouter une nouvelle référence à cette liste.

Puis, une fois que tous les contrôles d'interfaces utilisateur 22 se sont abonnés au singleton de communication 24, la méthode comprend une étape d'exécution du singleton de communication 24. Cette étape permet alors aux contrôles d'interface utilisateur 22 de communiquer avec les objets associés du ou des équipements d'automatisme 10. Pour cela, le singleton de communication 24 explore l'ensemble des contrôles d'interface utilisateur 22 abonnés et émet les requêtes lui permettant d'accéder aux différents objets d'automatisme associés aux contrôles d'interface utilisateur 22 (variables et protocole de communication). Grâce à l'exploration de l'ensemble des contrôles d'interface utilisateur 22 abonnés, le singleton de communication 24 peut optimiser le nombre et le type de requêtes de communication à envoyer vers le ou les équipements d'automatisme 10.

Préférentiellement, l'étape de création du singleton de communication 24 est réalisée au moment de l'étape d'abonnement d'un premier contrôle d'interface utilisateur 22. On implémente le singleton de communication 24 en écrivant une classe contenant une méthode qui crée une instance du singleton de communication 24 uniquement s'il n'en existe pas encore une. Sinon elle renvoie une référence vers l'objet singleton 24 qui est déjà instancié. Donc, lorsqu'un contrôle d'interface utilisateur 22 veut s'abonner au singleton de communication 24, on regarde d'abord si un singleton 24 a déjà été instancié. Si oui, le contrôle d'interface utilisateur 22 s'abonne à ce singleton 24; sinon, une instance du singleton 24 est d'abord créée avant que le contrôle d'interface utilisateur 22 ne s'y abonne.

Ainsi, le singleton de communication 24 est par exemple capable de notifier au code programme d'un contrôle d'interface utilisateur 22 tout changement de valeur d'un objet d'automatisme qui est associé à ce contrôle d'interface utilisateur 22.

La méthode utilisant un singleton de communication 24 permet de simplifier largement le programme application d'interface Homme-Machine 20 et la communication entre l'équipement d'interface Homme-Machine 30 et l'équipement d'automatisme 10. En effet, sans cette méthode, il faudrait en permanence analyser le fichier XAML du programme application 20, rechercher et identifier les différents contrôles d'interface utilisateur 22 et lancer les échanges correspondants à ces contrôles 22. Cela serait peu performant et nécessiterait des ressources importantes de l'unité centrale de l'équipement d'interface Homme-Machine 30.

Il est bien entendu que l'on peut, sans sortir du cadre de l'invention, imaginer d'autres variantes et perfectionnements de détail et de même envisager l'emploi de moyens équivalents.

## Revendications

1. Procédé de mise en oeuvre d'un programme application d'interface Homme-Machine (20) dans un équipement d'interface Homme-Machine (30) pour fournir des fonctions de surveillance, de visualisation, de commande, de configuration ou de programmation d'un ou plusieurs équipements d'automatisme (10) connectés à l'équipement d'interface Homme-Machine (30) via un réseau IP (50), le programme application d'interface Homme-Machine (20) comprenant plusieurs contrôles d'interface utilisateur (22) qui sont dotés d'une description en langage XAML et qui sont associés à des objets du ou des équipements d'automatisme (10), **caractérisé en ce que** le procédé comporte :
- une étape de création d'un singleton de communication (24) destiné à établir une communication entre le programme application d'interface Homme-Machine (20) et le ou les équipements d'automatisme (10) via le réseau IP,
- une étape d'abonnement des contrôles d'interface utilisateur (22) au singleton de communication (24), de sorte que les contrôles d'interface utilisateur (22) utilisent le même singleton de communication (24),
- une étape d'exécution du singleton de communication (24) permettant aux contrôles d'interface utilisateur (22) de communiquer avec lesdits objets associés du ou des équipements d'automatisme (10).

2. Procédé selon la revendication 1, **caractérisé en ce qu'**un objet d'un équipement d'automatisme (10) est défini par une variable (13) dudit équipement d'automatisme (10) et par un protocole de communication (18) permettant à un contrôle d'interface utilisateur (22) d'accéder à ladite variable.

3. Procédé selon la revendication 1, **caractérisé en ce que** l'étape de création du singleton de communication (24) est réalisée au moment de l'étape d'abonnement d'un premier contrôle d'interface utilisateur (22).

4. Procédé selon la revendication 1, **caractérisé en ce que** le programme application d'interface Homme-Machine (20) est développé avec un outil de création (42) d'interface utilisateur qui est conforme au langage XAML et qui instancie des contrôles d'interface utilisateur (22) dans le programme application (20).

5. Procédé selon la revendication 4, **caractérisé en ce que** le programme application d'interface Homme-Machine (20) est développé avec l'outil de création (42) Microsoft® Expression Blend™.

6. Procédé selon la revendication 1, **caractérisé en ce que** le programme application d'interface Homme-Machine (20) s'exécute dans un environnement Microsoft® Silverligh™ (32).

7. Procédé selon la revendication 1, **caractérisé en ce que** le programme application d'interface Homme-Machine (20) s'exécute dans un environnement Microsoft® Windows Presentation Foundation (WPF) (32).

8. Procédé selon la revendication 1, **caractérisé en ce que** le singleton de communication (24) explore les contrôles d'interface utilisateur (22) abonnés, de façon à optimiser les requêtes de communication permettant d'accéder aux objets du ou des équipements d'automatisme (10).

9. Procédé selon la revendication 1, **caractérisé en ce que** le programme application d'interface Homme-Machine (20) est mémorisé dans un serveur WEB (11) intégré dans un équipement d'automatisme (10).

10. Procédé selon la revendication 9, **caractérisé en ce que** le programme application d'interface Homme-Machine (20) est téléchargé dans l'équipement d'interface Homme-Machine (30) par un navigateur Web lequel contient un environnement Microsoft® Silverligh™ (32) pour exécuter le programme application (20).

11. Equipement d'interface Homme-Machine (30), **caractérisé en ce qu'**il est destiné à mettre en oeuvre un programme application d'interface Homme-Machine (20) au moyen d'un procédé selon l'une des revendications précédentes.
